# EUROPEAN PATENT APPLICATION

(11) **EP 4 663 991 A1**
(43) Date of publication of application: **17.12.2025**
(21) Application number: 24752835.9
(22) Date of filing: 04.02.2024
(51) Int. Cl.: F16K 31/64, F16K 31/68

(54) **ANTI-FREEZE VALVE**

(30) Priority: 10.02.2023 CN 202310115578; 10.02.2023 CN 202320313844 U; 10.02.2023 CN 202310110772
(71) Applicant: Zhejiang Dunan Artificial Environment Co., Ltd., Shaoxing Zhejiang 311835 (CN)
(72) Inventor: YU, Zhou, Shaoxing, Zhejiang 311835 (CN); MA, Yanting, Shaoxing, Zhejiang 311835 (CN); LOU, Xuanbo, Shaoxing, Zhejiang 311835 (CN)
(74) Representative: Zacco GmbH
(86) International application number: PCT/CN2024/075835
(87) International publication number: WO 2024/164980

(57) **Abstract**

Some embodiments of the present invention provide an anti-freeze valve, includes: a valve seat assembly having a first liquid passage, a second liquid passage, a mounting cavity, a balance passage and a drainage passage, the drainage passage is in communication with the first liquid passage, and the mounting cavity is in communication with the second liquid passage via the balance passage; a piston configured to block or open the drainage passage and having a liquid port; a valve core assembly including a valve core, the valve core being movably disposed in the mounting cavity to close or open the liquid port; and a thermo-bulb including a temperature-sensing portion and a thermo-bulb push rod, the thermo-bulb push rod being configured to drive the valve core to move. When a temperature of a medium surrounding the temperature-sensing portion is lower than a preset temperature value, the thermo-bulb push rod contracts, causing the valve core to move to open the liquid port, and a medium in the first liquid passage pushes the piston to move toward a side away from the drainage passage to open the drainage passage. The anti-freeze valve solves the problem of poor reliability in valve port opening and closing caused by a thermo-bulb in the prior art.

## Description

The present invention claims priority to Chinese Patent Invention No. 202310115578.0, entitled "Anti-freeze Valve," filed with the China National Intellectual Property Administration on February 10, 2023, Chinese patent invention No. 202310110772.X, entitled "Anti-freeze Valve," filed with the China National Intellectual Property Administration on February 10, 2023, and Chinese patent invention No. 202320313844.6, entitled "Anti-freeze Valve," filed with the China National Intellectual Property Administration on February 10, 2023.

### Technical Field

The invention relates to the technical field of anti-freeze valves, and specifically relates to an anti-freeze valve.

### Background

At present, a temperature-sensing bulb is disposed within a valve seat of an anti-freeze valve. The temperature-sensing bulb senses the water temperature to control the opening and closing states of the valve, thereby ensuring that a valve port can be timely opened to discharge water from a pipeline when the water temperature drops to a preset value, so as to prevent the water in the pipeline from freezing and causing the pipeline to burst.

However, in the prior art, a valve core is driven to move by the expansion and contraction of a push rod of the temperature-sensing bulb to directly open the valve port for drainage. Due to the limited ejection force of the push rod of the temperature-sensing bulb, the size of the valve port that can be opened is also limited. As a result, large valve ports cannot be opened or closed, and in some cases, the valve can fail to open or close, which affects the drainage reliability of the anti-freeze valve and even affects the normal operation of the anti-freeze valve.

### Summary

Some embodiments of the present invention provide an anti-freeze valve to solve the problem of poor reliability in valve port opening and closing caused by a thermo-bulb of an anti-freeze valve in the art known to inventors.

In order to solve the above objective, the present invention provides an anti-freeze valve, includes: a valve seat assembly including a first liquid passage, a second liquid passage, a mounting cavity, a balance passage and a drainage passage, the first liquid passage is in communication with the second liquid passage, the drainage passage is in communication with the first liquid passage, and the mounting cavity is in communication with the second liquid passage by the balance passage; a piston movably disposed in the mounting cavity to block or open the drainage passage, the piston has a liquid port, the liquid port is in communication with the drainage passage, and a flow area of the liquid port is smaller than a flow area of the drainage passage; a valve core assembly comprising a valve core, the valve core is movably disposed within the mounting cavity to close or open the liquid port; and a thermo-bulb connected to the valve seat assembly, the thermo-bulb comprises a temperature-sensing portion and a thermo-bulb push rod, and the thermo-bulb push rod is configured to drive the valve core to move. When a temperature of a medium surrounding the temperature-sensing portion is lower than a preset temperature value, the thermo-bulb push rod contracts, causing the valve core to move to open the liquid port, and a medium in the first liquid passage pushes the piston to move toward a side away from the drainage passage to open the drainage passage.

By applying the technical solution of the present invention, the piston is movably disposed in the mounting cavity to block or open the drainage passage. The piston has a liquid port that is in communication with the drainage passage. The valve core is movably disposed in the mounting cavity to close or open the liquid port. Under normal operating conditions, liquid is allowed to flow within the first liquid passage and the second liquid passage, while the liquid port and the drainage passage are both in a closed state, such that the liquid inside the valve seat assembly is prevented from flowing through the drainage passage. When the temperature of the medium surrounding the temperature-sensing portion is lower than the preset temperature value, the liquid inside the anti-freeze valve can freeze. At this point, the thermo-bulb push rod contracts, causing the valve core to move to open the liquid port. Since the mounting cavity is in communication with the second liquid passage by the balance passage, the pressure in an upper chamber of the piston decreases. As a result, the medium in the first liquid passage pushes the piston to move toward the side away from the drainage passage. The pressure in a lower chamber of the piston is greater than the pressure in the upper chamber of the piston, so the piston moves upward toward a side away from the drainage passage under the action of the pressure difference, so as to open the drainage passage for drainage.

Compared with the art known to inventors a valve port is opened or closed solely through a thermo-bulb push rod, the anti-freeze valve of the present invention enables the piston to move up and down based on the pressure difference between the upper and lower chambers of the piston. In this way, the piston opens or closes the drainage passage, thereby solving the problem of poor reliability in valve port opening and closing caused by the thermo-bulb of an anti-freeze valve in the prior art, and improving the drainage reliability of the drainage passage and the operational reliability of the anti-freeze valve. Meanwhile, the above configuration of the piston enables a large-sized drainage passage to be opened or closed, thereby enhancing the versatility of the anti-freeze valve.

In some embodiments, one end of the drainage passage extends into the first liquid passage.

In some embodiments, the valve core assembly further includes a first elastic structure configured to apply an elastic force to move the valve core toward a side away from the liquid port.

In some embodiments, a flow area of the balance passage is smaller than a flow area of the liquid port.

In some embodiments, the piston includes a piston body having a liquid port; a communication portion, the piston has a liquid port, and the liquid port is in communication with the drainage passage; and a blocking portion connected to a second end of the communication portion, the blocking portion being configured to block or open the drainage passage.

In some embodiments, the liquid port is a tapered hole, the communication portion has a straight hole, and the liquid port is in communication with the drainage passage by the straight hole, an aperture of the tapered hole gradually decreases in a direction from the tapered hole to the straight hole.

In some embodiments, the valve seat assembly comprises: a first valve seat having the first liquid passage and a first mounting opening; a second valve seat having the second liquid passage, the first valve seat being connected to the second valve seat; and a valve cover disposed in the first mounting opening and connected to both the first valve seat and the second valve seat. The valve cover has the balance passage and a first mounting hole. The valve cover and the first valve seat together define the mounting cavity. At least a portion of the piston is slidably disposed in the first mounting hole, and an extending direction of the first mounting hole is consistent with a sliding direction of the piston.

In some embodiments, the valve cover includes: a valve cover body having a second mounting hole, the balance passage and the first mounting hole, a thermo-bulb body of the thermo-bulb is disposed in the second mounting hole, and the balance passage is spaced apart from the second mounting hole; and a cylindrical structure located within the first mounting hole, a first end of the cylindrical structure is connected to the valve cover body; at least a portion of the valve core is located within an inner cavity of the cylindrical structure, and the inner cavity is in communication with both the balance passage and the second mounting hole.

In some embodiments, the valve cover further includes a stopper structure disposed on a second end of the cylindrical structure, the stopper structure has a through hole for the valve core to pass through, and the stopper structure is configured to limit and stop the first elastic structure.

In some embodiments, the second valve seat has a second mounting opening, at least a portion of the valve cover extends into the second mounting opening, and the second liquid passage is in communication with the balance passage by the second mounting opening; the anti-freeze valve further includes: a first sealing structure disposed between the valve cover and the first mounting opening; or a second sealing structure disposed between the valve cover and the second mounting opening; or a first sealing structure disposed between the valve cover and the first mounting opening; and a second sealing structure disposed between the valve cover and the second mounting opening.

In some embodiments, the balance passage is a single passage located on one side of the second mounting hole; or a plurality of balance passages are arranged circumferentially around the second mounting hole at intervals.

In some embodiments, an inner hole of the drainage passage serves as a drainage portion, and the anti-freeze valve further includes a second elastic structure configured to apply an elastic force to move the piston toward a side away from the drainage portion.

In some embodiments, the valve core assembly further includes a first elastic structure configured to apply an elastic force to move the valve core toward a side away from the liquid port and to apply an elastic force to move the piston toward one side of the drainage portion; the first elastic structure is a first spring, the second elastic structure is a second spring, and a stiffness coefficient of the first spring is greater than a stiffness coefficient of the second spring.

In some embodiments, a cross-section of the drainage passage is circular and has a diameter greater than or equal to 10 mm.

In some embodiments, the valve seat assembly further includes a communication passage arranged at an angle to both the first liquid passage and the second liquid passage, the first liquid passage being in communication with the second liquid passage by the communication passage, the communication passage is offset from the drainage passage.

In some embodiments, the valve seat assembly includes a first valve seat and a second valve seat, the first valve seat has the first liquid passage and the first mounting opening, the second valve seat has the second liquid passage, and the first valve seat is connected to the second valve seat; the communication passage includes a first sub-communication passage and a second sub-communication passage; the first valve seat includes: a first cylindrical body having a first mounting opening, the drainage passage is located within the first cylindrical body, a limiting space is formed between the drainage passage and an inner cylindrical wall of the first cylindrical body, and the limiting space is configured to limit and stop the second elastic structure; a second cylindrical body connected to the second valve seat, an inner cavity of the second cylindrical body forming the first sub-communication passage; and a tubular body penetrating through the first cylindrical body and the second cylindrical body, an inner cavity of the tubular body forming the first liquid passage.

In some embodiments, the second valve seat includes: a second tubular body, an inner cavity of the second tubular body forming the second liquid passage; a third cylindrical body arranged on the second tubular body and being in communication with the second liquid passage, the third cylindrical body having a second mounting opening; and a fourth cylindrical body arranged on the second tubular body and being in communication with the second liquid passage, an inner cavity of the fourth cylindrical body forming the second sub-communication passage and being in communication with the second cylindrical body, the first cylindrical body and the third cylindrical body are oppositely arranged and connected, and the second cylindrical body and the fourth cylindrical body are oppositely arranged and connected.

Preferably, the anti-freeze valve further comprises a third sealing structure disposed at the connection between the second cylindrical body and the fourth cylindrical body, where the third sealing structure is located between an end surface of the second cylindrical body and an end surface of the fourth cylindrical body.

### Brief Description of the Drawings

The accompanying drawings, which constitute a part of the present invention, are used for providing a further understanding of the present invention; and illustrative embodiments of the present invention and descriptions thereof are intended to explain the present invention and are not construed to unduly limit the present invention. In the drawings:
FIG. 1 illustrates a sectional view showing Embodiment 1 of an anti-freeze valve in an open state according to the present invention;
FIG. 2 illustrates a sectional view of a valve cover of the anti-freeze valve shown in FIG. 1;
FIG. 3 illustrates a schematic perspective view showing the structure of the anti-freeze valve in FIG. 1;
FIG. 4 illustrates a side view of the anti-freeze valve shown in FIG. 3;
FIG. 5 illustrates a sectional view of a valve core of the anti-freeze valve shown in FIG. 1;
FIG. 6 illustrates a sectional view of a piston of the anti-freeze valve shown in FIG. 1;
FIG. 7 illustrates a sectional view showing Embodiment 2 of an anti-freeze valve in an open state according to the present invention;
FIG. 8 illustrates a sectional view of the anti-freeze valve shown in FIG. 7 in a closed state;
FIG. 9 illustrates a sectional view of a valve cover of the anti-freeze valve shown in FIG. 7;
FIG. 10 illustrates a schematic perspective view showing the structure of a second valve seat of the anti-freeze valve in FIG. 7;
FIG. 11 illustrates a schematic perspective view showing the structure of a first valve seat of the anti-freeze valve in FIG. 7;
FIG. 12 illustrates a sectional view of the first valve seat of the anti-freeze valve shown in FIG. 7; and
FIG. 13 illustrates a sectional view of the second valve seat of the anti-freeze valve shown in FIG. 7.

The following reference signs are involved in the above-mentioned accompanying drawings:
10, valve seat assembly; 11, liquid flow portion; 111, first liquid passage; 112, second liquid passage; 113, communication passage; 12, mounting cavity; 13, drainage portion; 1131, first sub-communication passage; 1132, second sub-communication passage; 14, balance passage; 15, first valve seat; 151, first mounting opening; 152, first cylindrical body; 153, second cylindrical body; 154, first tubular body; 16, second valve seat; 161, second tubular body; 162, third tubular body; 163, fourth cylindrical body; 164, second mounting opening; 17, valve cover; 171, first mounting hole; 172, second mounting hole; 173, valve cover body; 174, cylindrical structure; 175, stopper structure; 1751, through hole; 18, drainage passage; 20, piston; 21, liquid port; 22, piston body; 221, accommodating space; 222, limiting recess; 23, communication portion; 24, blocking portion; 30, valve core; 31, first hole section; 32, second hole section; 40, first elastic structure; 50, thermo-bulb; 51, temperature-sensing portion; 52, thermo-bulb push rod; 53, thermo-bulb body; 200, second elastic structure; 300, first sealing structure; 400, second sealing structure; 600, third sealing structure.

### Detailed Description of the Embodiments

It should be noted that, without conflict, the embodiments of the present invention and the features in the embodiments can be combined with each other. The present invention will be described in detail below with reference to the accompanying drawings and in conjunction with the embodiments.

It should be noted that, unless otherwise specified, all technical and scientific terms used in the present invention have the same meaning as commonly understood by those skilled in the art to which the present invention pertains.

In the present invention, unless otherwise specified, directional terms such as "upper" and "lower" generally refer to the directions shown in the accompanying drawings, or to vertical, perpendicular, or gravitational directions; similarly, for the sake of clarity and description, "left" and "right" generally refer to the left and right as shown in the drawings; and "inner" and "outer" refer to positions relative to the contour of each component itself. However, these directional terms are not intended to limit the present invention.

To solve the problem of poor reliability in valve port opening and closing caused by a thermo-bulb of an anti-freeze valve in the art known to inventors, the present invention provides an anti-freeze valve.

### Embodiment 1

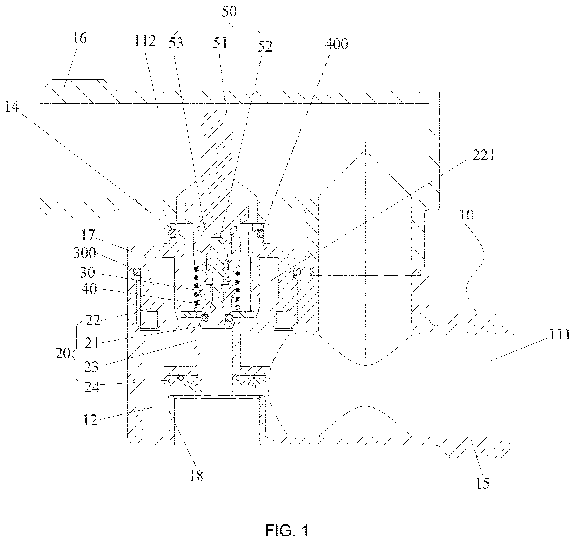

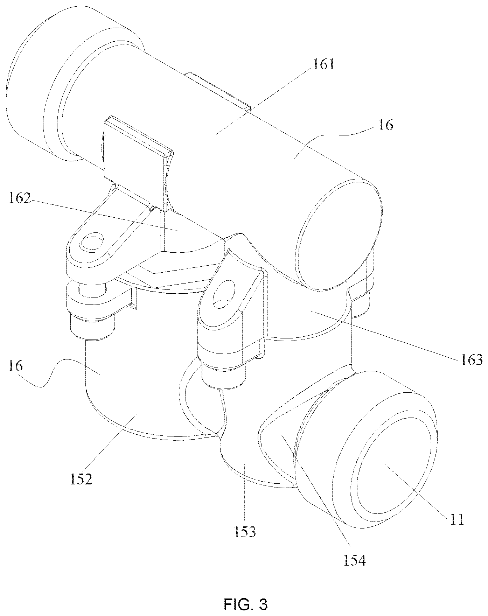

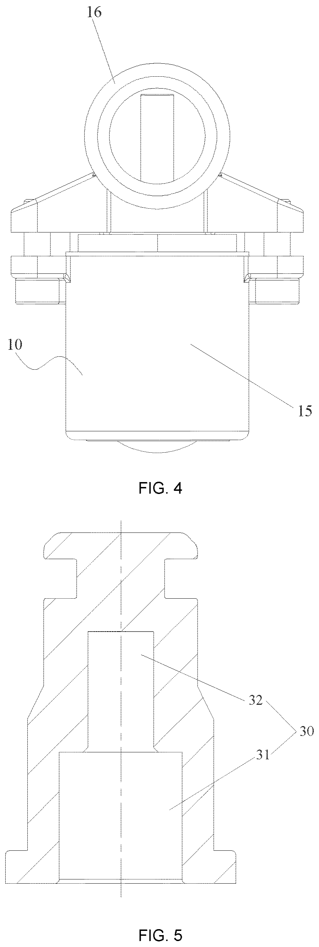

As shown in FIG. 1 to FIG. 6, an anti-freeze valve includes a valve seat assembly 10, a piston 20, a valve core assembly and a thermo-bulb 50. The valve seat assembly 10 includes a first liquid passage 111, a second liquid passage 112, a mounting cavity 12, a balance passage 14 and a drainage passage 18. The first liquid passage 111 is in communication with the second liquid passage 112. The drainage passage 18 is in communication with the first liquid passage 111. The mounting cavity 12 is in communication with the second liquid passage 112 by the balance passage 14. The piston 20 is movably disposed in the mounting cavity 12 to block or open the drainage passage 18. The piston 20 has a liquid port 21. The liquid port 21 is in communication with the drainage passage 18. A flow area of the liquid port 21 is smaller than a flow area of the drainage passage 18. The valve core assembly includes a valve core 30. The valve core 30 is movably disposed in the mounting cavity 12 to close or open the liquid port 21. A thermo-bulb 50 is connected to the valve seat assembly 10. The thermo-bulb 50 includes a temperature-sensing portion 51 and a thermo-bulb push rod 52. The thermo-bulb push rod 52 is configured to drive the valve core 30 to move. When a temperature of a medium surrounding the temperature-sensing portion 51 is lower than a preset temperature value, the thermo-bulb push rod 52 contracts, causing the valve core 30 to move to open the liquid port 21, and a medium in the first liquid passage 111 pushes the piston 20 to move toward a side away from the drainage passage 18 to open the drainage passage 18.

By applying the technical solution of the present invention, the piston 20 is movably disposed in the mounting cavity 12 to block or open the drainage passage 18. The piston 20 has a liquid port 21 that is in communication with the drainage passage 18. The valve core 30 is movably disposed in the mounting cavity 12 to close or open the liquid port 21. Under normal operating conditions, liquid is allowed to flow within the first liquid passage 111 and the second liquid passage 112, while the liquid port 21 and the drainage passage 18 are both in a closed state, such that the liquid inside the valve seat assembly is prevented from flowing through the drainage passage 18. When the temperature of the medium surrounding the temperature-sensing portion 51 is lower than the preset temperature value, the liquid inside the anti-freeze valve can freeze. At this point, the thermo-bulb push rod contracts, causing the valve core 30 to move to open the liquid port 21. Since the mounting cavity 12 is in communication with the second liquid passage 112 by the balance passage 14, the pressure in an upper chamber of the piston decreases. As a result, the medium in the first liquid passage 111 pushes the piston 20 to move toward the side away from the drainage passage 18. The pressure in a lower chamber of the piston is greater than the pressure in the upper chamber of the piston, so the piston 20 moves upward toward a side away from the drainage passage 18 under the action of the pressure difference, so as to open the drainage passage 18 for drainage.

Compared with the art known to inventors a valve port is opened or closed solely through a thermo-bulb push rod, the anti-freeze valve of the present invention enables the piston 20 to move up and down based on the pressure difference between the upper and lower chambers of the piston. In this way, the piston 20 opens or closes the drainage passage 18, thereby solving the problem of poor reliability in valve port opening and closing caused by the thermo-bulb of an anti-freeze valve in the prior art, and improving the drainage reliability of the drainage passage 18 and the operational reliability of the anti-freeze valve. Meanwhile, the above configuration of the piston 20 enables the drainage passage 18 of a larger size to be opened or closed, enhancing the applicability of the anti-freeze valve.

In the present embodiment, one end of the drainage passage 18 extends into the first liquid passage 111. The first liquid passage 111 is configured for circulating water to flow therein, and the drainage passage 18 is located within the first liquid passage 111, so that the drainage passage 18 is positioned closer to the circulating water. In this way, when the anti-freeze valve is exposed to a low-temperature environment, the above configuration reduces a temperature difference between the drainage passage 18 and the circulating water, thereby solving the problem in the prior art in which a valve port of the anti-freeze valve is prone to freezing. This configuration allows for lower circulating water temperatures without causing the drainage passage 18 to freeze, and also supports lower ambient temperatures, thereby improving the versatility of the anti-freeze valve.

In the present embodiment, the first liquid passage 111 and the second liquid passage 112 form a liquid flow portion 11.

In the present embodiment, at least a portion of the temperature-sensing portion 51 extends into the second liquid passage 112.

As shown in FIG. 1, the valve core assembly further includes a first elastic structure 40. The first elastic structure 40 is configured to apply an elastic force to move the valve core 30 toward a side away from the liquid port 21. When the temperature of the medium surrounding the temperature-sensing portion 51 is lower than the preset temperature value, the thermo-bulb push rod 52 contracts, causing the first elastic structure 40 to drive the valve core 30 to move to open the liquid port 21, and the medium in the first liquid passage 111 pushes the piston 20 to move toward a side away from the drainage passage 18 to open the drainage passage 18.

Specifically, under normal operating conditions, liquid is allowed to flow within the first liquid passage 111 and the second liquid passage 112, while the liquid port 21 and the drainage passage 18 are both in a closed state, and the first elastic structure 40 is in a compressed state, such that the liquid inside the valve seat assembly is prevented from flowing through the drainage passage 18. When a temperature in the second liquid passage 112 detected by the temperature-sensing portion 51 of the thermo-bulb 50 is lower than the preset temperature value, the liquid inside the anti-freeze valve can freeze. At this point, the first elastic structure 40 drives the valve core 30 to move under elastic force thereof, so as to open the liquid port 21. Since the mounting cavity 12 is in communication with the second liquid passage 112 by the balance passage 14, the pressure in an upper chamber of the piston decreases. As a result, the medium in the first liquid passage 111 pushes the piston 20 to move toward the side away from the drainage passage 18. The pressure in a lower chamber of the piston is greater than the pressure in the upper chamber of the piston, so the piston 20 moves upward toward a side away from the drainage passage 18 under the action of the pressure difference, so as to open the drainage passage 18 for drainage.

Optionally, the first elastic structure 40 is a spring.

In the present embodiment, when the temperature in the second liquid passage 112 is greater than or equal to the preset temperature value, the thermo-bulb push rod 52 pushes the valve core 30 to close the liquid port 21. The medium in the second liquid passage 112 enters the mounting cavity 12 by the balance passage 14, so as to drive the piston 20 to move toward the drainage passage 18 and close the drainage passage 18. In this way, when the temperature in the second liquid passage 112 is greater than or equal to the preset temperature value, the liquid in the first liquid passage 111 and the second liquid passage 112 can flow normally. At this point, the thermo-bulb push rod 52 is in an extended state and pushes the valve core 30 to move toward the liquid port 21, thereby closing the liquid port 21. Since the mounting cavity 12 is in communication with the second liquid passage 112 by the balance passage 14, the pressure in the upper chamber of the piston is greater than that in the lower chamber of the piston, such that the piston 20 moves toward the drainage passage 18 under the action of the pressure difference, so as to close the drainage passage 18 and ensure the normal liquid flow of the anti-freeze valve.

Optionally, the preset temperature value is greater than or equal to 3°C and less than or equal to 5°C.

In the present embodiment, a cross-section of the drainage passage 18 is circular and has a diameter greater than or equal to 10 mm.

Preferably, a flow area of the balance passage 14 is smaller than the flow area of the liquid port 21. In this way, the above configuration, on one hand, ensures that the liquid can be smoothly discharged from the drainage passage 18 to the outside of the anti-freeze valve, thereby improving the drainage efficiency of the anti-freeze valve; and on the other hand, the above configuration prevents the liquid from accumulating inside the piston 20, which can affect the opening of the drainage passage 18, thus further enhancing the operational reliability of the anti-freeze valve.

In the present embodiment, the liquid port 21 is a circular port, the diameter of the drainage passage 18 is greater than a diameter of the circular port, the flow capacity of the balance passage 14 is less than that of the liquid port 21, and the flow capacity of the drainage passage 18 is greater than that of the liquid port 21, thereby not only improving the smoothness of liquid flow inside the anti-freeze valve, but also enhancing the operational reliability of the anti-freeze valve.

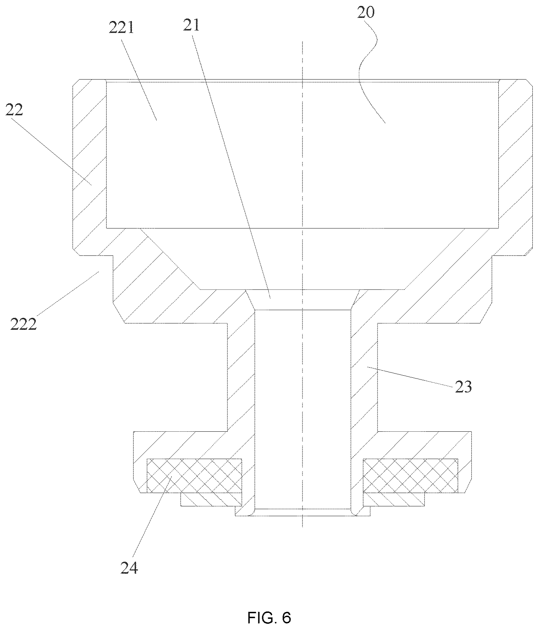

As shown in FIG. 6, the piston 20 includes a piston body 22, a communication portion 23, and a blocking portion 24. The piston body 22 has the liquid port 21. A first end of the communication portion 23 is connected to the piston body 22, and the liquid port 21 is in communication with the drainage passage 18 by the communication portion 23. A second end of the communication portion 23 is connected to the blocking portion 24, and the blocking portion 24 is configured to block or open the drainage passage 18. In this way, when the temperature in the second liquid passage 112 is lower than the preset temperature value, the valve core 30 opens the liquid port 21, and the liquid port 21 is in communication with the drainage passage 18 by the communication portion 23, so as to ensure that the pressure in the upper chamber of the piston is lower than the pressure in the lower chamber of the piston. The piston 20 moves upward under the action of the pressure difference between the upper and lower chambers of the piston, so as to open the drainage passage 18. At this point, the anti-freeze valve can perform drainage operations to prevent liquid from freezing inside the anti-freeze valve. Meanwhile, this configuration simplifies the structure of the piston 20, facilitates manufacturing and implementation, and thereby reduces the manufacturing cost and difficulty of the piston 20.

Specifically, the communication portion 23 is cylindrical, with two ends respectively connected to the piston body 22 and the blocking portion 24. The valve core 30 is slidably disposed within the piston body 22 to open or close the liquid port 21.

In the present embodiment, the liquid port 21 is a tapered hole, the communication portion 23 has a straight hole, and the liquid port 21 is in communication with the drainage passage 18 by the straight hole, an aperture of the tapered hole gradually decreases in a direction from the tapered hole to the straight hole. In this way, the above configuration enables a diameter of an end of the liquid port 21 adjacent to the valve core 30 to be greater than a diameter of the valve core 30, so as to facilitate the insertion of the valve core 30 into the liquid port 21, thereby reducing the difficulty in closing the anti-freeze valve. Moreover, when the liquid port 21 is in an open state, the tapered hole increases a flow velocity of the flow medium, thereby improving a liquid passing velocity through the liquid port 21.

Optionally, the valve core 30 includes an insertion section, which is located at an end portion of the valve core 30. When at least a portion of the insertion section is inserted into the straight hole, the liquid port 21 is closed. The insertion section is a cylindrical structure that extends into the straight hole to close the liquid port 21. When the liquid port 21 is closed, the valve core 30 has no lower limit position, so that stroke fluctuations of the thermo-bulb push rod 52 do not affect the blocking reliability of the valve core 30, and thermo-bulbs 50 of various specifications can be installed on the anti-freeze valve, thereby reducing the manufacturing difficulty of the anti-freeze valve.

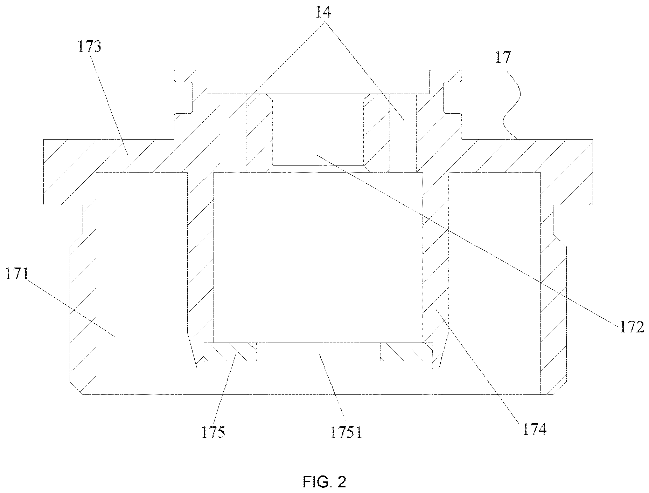

As shown in FIG. 1 and FIG. 2, the valve seat assembly 10 further includes a communication passage 113. The communication passage 113 is arranged at an angle to both the first liquid passage 111 and the second liquid passage 112. The first liquid passage 111 is in communication with the second liquid passage 112 by the communication passage 113. The communication passage 113 is offset from the drainage passage 18. Specifically, the circulating water entering the first liquid passage 111 can be in communication with the second liquid passage 112 by the communication passage 113, or the circulating water entering the second liquid passage 112 can be in communication with the first liquid passage 111 by the communication passage 113, so as to ensure smooth flow of the circulating water within the first liquid passage 111 and the second liquid passage 112. When the temperature in the second liquid passage 112 is lower than the preset temperature value, the drainage passage 18 is configured to allow the circulating water to be discharged, thereby preventing freezing inside the anti-freeze valve. In this way, the above configuration prevents interference between the circulating water in the communication passage 113 and the circulating water in the drainage passage 18, thus ensuring the normal operation of the anti-freeze valve.

Optionally, an angle between the communication passage 113 and the first liquid passage 111 is 90°, and an angle between the communication passage 113 and the second liquid passage 112 is also 90°. The communication passage 113 and the drainage passage 18 are arranged in parallel and are respectively located on both sides of the first liquid passage 111.

As shown in FIG. 1, FIG. 2, FIG. 3 and FIG. 4, the valve seat assembly 10 includes a first valve seat 15, a second valve seat 16 and a valve cover 17. The first valve seat 15 has the first liquid passage 111 and a first mounting opening 151. The second valve seat 16 has the second liquid passage 112, and the first valve seat 15 is connected to the second valve seat 16. The valve cover 17 is disposed in the first mounting opening 151 and connected to both the first valve seat 15 and the second valve seat 16. The valve cover 17 has the balance passage 14 and a first mounting hole 171. The valve cover 17 and the first valve seat 15 together define the mounting cavity 12. At least a portion of the piston 20 is slidably disposed in the first mounting hole 171. An extending direction of the first mounting hole 171 is consistent with a sliding direction of the piston 20. In this way, the valve cover 17 is connected to both the first valve seat 15 and the second valve seat 16, and together with the first valve seat 15 defines the mounting cavity 12. The piston 20 is located in the mounting cavity 12 and is slidable within the first mounting hole 171 of the valve cover 17. On one hand, this configuration enables a more rational internal structural layout of the valve seat assembly 10, improves the utilization rate of internal space of the valve seat assembly 10, and prevents the piston 20, the valve core 30 and the thermo-bulb 50 from affecting the normal flow of liquid in the first liquid passage 111 and the second liquid passage 112. On the other hand, this configuration simplifies the structure of the valve seat assembly 10, facilitates manufacturing and implementation, and thereby reduces the manufacturing cost and difficulty of the anti-freeze valve.

In the present embodiment, the first valve seat 15 and the second valve seat 16 are arranged oppositely, the first liquid passage 111 and the second liquid passage 112 are arranged in parallel and are internally configured to allow the flow of circulating water therein, and the drainage passage 18 is located within the first liquid passage 111, so that the drainage passage 18 is closer to the circulating water, and under a low-temperature environment, the temperature difference between the drainage passage 18 and the circulating water is smaller, which allows a lower temperature of the circulating water without causing the drainage passage 18 to freeze, and can support a lower temperature of the circulating water and a lower ambient temperature.

As shown in FIG. 2, the valve cover 17 includes a valve cover body 173 and a cylindrical structure 174. The valve cover body 173 has a second mounting hole 172, the balance passage 14 and the first mounting hole 171. A thermo-bulb body 53 of the thermo-bulb 50 is disposed in the second mounting hole 172. The balance passage 14 is spaced apart from the second mounting hole 172. The cylindrical structure 174 is located within the first mounting hole 171. A first end of the cylindrical structure 174 is connected to the valve cover body 173. At least a portion of the valve core 30 is located within an inner cavity of the cylindrical structure 174. The inner cavity is in communication with both the balance passage 14 and the second mounting hole 172. In this way, an annular space is formed between the valve cover body 173 and the cylindrical structure 174. The piston body 22 is located in the annular space. The valve core 30 is disposed within the cylindrical structure 174 in a vertically movable manner. When the liquid enters the cylindrical structure 174 by the balance channel 14, the above configuration can quickly increase the pressure in the upper chamber of the piston, so as to push the piston 20 to quickly move toward the drainage passage 18 and close the drainage passage 18, thereby improving the valve closing efficiency of the anti-freeze valve. Meanwhile, this configuration simplifies the structure of the valve cover 17, facilitates manufacturing and implementation, and thereby reduces the manufacturing cost and difficulty of the anti-freeze valve.

In the present embodiment, the thermo-bulb body 53 is threadedly connected to the second mounting hole 172 to mount the thermo-bulb 50 on the valve cover 17. This configuration not only facilitates the assembly and disassembly of the two components but also prevents the thermo-bulb body 53 from shifting or shaking within the valve seat assembly 10, thereby ensuring the structural stability of the anti-freeze valve. The valve core 30 has a first hole section 31 and a second hole section 32 that are in communication with each other. An inner diameter of the first hole section 31 is larger than that of the second hole section 32. A stepped surface is formed at the junction between the first hole section 31 and the second hole section 32, which is configured to limit and stop the thermo-bulb body 53. An end surface of the thermo-bulb push rod 52 away from the thermo-bulb body 53 is configured to abut against a bottom surface of the second hole section 32 to push the valve core 30 to close the liquid port 21. This configuration, on one hand, limits and stops the thermo-bulb body 53 by means of the stepped surface formed at the junction between the first hole section 31 and the second hole section 32, so as to restrict the position of the valve core 30 and ensure an appropriate opening degree of the liquid port 21; on the other hand, the thermo-bulb push rod 52 is capable of driving the valve core 30 to move by pushing the bottom surface of the second hole section 32, so as to realize the blocking function of the valve core 30.

Specifically, at least a portion of the thermo-bulb body 53 extends into the first hole section 31 and slides in an extending direction of the first hole section 31. In this way, a sliding direction of the thermo-bulb body 53 is restricted by the second hole section 32, and a movement direction of the thermo-bulb body 52 is accordingly restricted, thereby achieving internal positioning of the valve core 30 through the cooperation between the thermo-bulb push rod 52 and the valve core 30, so as to ensure that the valve core 30 can move into the liquid port 21 to block the liquid port 21, thereby improving the sliding reliability of the thermo-bulb body 53.

Optionally, an outer diameter of the thermo-bulb body 53 matches the inner diameter of the first hole section 31, and an end of the thermo-bulb push rod 52 away from the thermo-bulb body 53 is an expanded section, an outer diameter of which matches that of the second hole section 32. In this way, the above configuration enables the thermo-bulb push rod 52 and the thermo-bulb body 53 to jointly perform guiding and positioning functions with respect to the valve core 30, i.e., the thermo-bulb 50 is positioned at two locations relative to the valve core 30, thereby improving the movement stability of the valve core 30.

Optionally, the first mounting hole 171 and the second mounting hole 172 are coaxially arranged.

As shown in FIG. 1, the valve cover 17 further includes a stopper structure 175. The stopper structure 175 is disposed on a second end of the cylindrical structure 174. The stopper structure 175 has a through hole 1751 for the valve core 30 to pass through. The stopper structure 175 is configured to limit and stop the first elastic structure 40. Optionally, the first elastic structure 40 is a spring. In this way, the stopper structure 175 limits and stops the first elastic structure 40 to ensure that the spring is in a compressed state when the valve core 30 closes the liquid port 21. Meanwhile, the above configuration further increases the pressure in the upper chamber of the piston. When the valve core 30 closes the liquid port 21, the pressure in the upper chamber of the piston is greater than that in the lower chamber of the piston, so as to drive the piston 20 to move toward the drainage passage 18 and close the drainage passage 18.

Optionally, the second valve seat 16 has a second mounting opening 164. At least a portion of the valve cover 17 extends into the second mounting opening 164. The second liquid passage 112 is in communication with the balance passage (14) by the second mounting opening (164). The anti-freeze valve further includes a first sealing structure 300 and/or a second sealing structure 400. The first sealing structure 300 is disposed between the valve cover 17 and the first mounting opening 151, and the second sealing structure 400 is disposed between the valve cover 17 and the second mounting opening 164. In this way, the valve cover 17 is connected to both the first valve seat 15 and the second valve seat 16, and the above configuration of the first sealing structure 300 and/or the second sealing structure 400 improves the sealing performance of the anti-freeze valve, thereby preventing liquid leakage at the connection between the valve cover 17 and the first valve seat 15 and/or the second valve seat 16.

In the present embodiment, the anti-freeze valve further includes the first sealing structure 300 and the second sealing structure 400. The first sealing structure 300 is disposed at the connection between the valve cover 17 and the first valve seat 15, and the second sealing structure 400 is disposed at the connection between the valve cover 17 and the second valve seat 16, so as to improve the sealing performance at the connections between the valve cover 17 and the first valve seat 15 and the second valve seat 16.

Optionally, the first sealing structure 300 is a sealing ring.

Optionally, the second sealing structure 400 is a sealing ring.

Preferably, the balance passage 14 is a single passage located on one side of the second mounting hole 172; or, a plurality of balance passages 14 are arranged circumferentially around the second mounting hole 172 at intervals. In this way, the above configuration enables a more flexible and diverse selection of the number of balance passages 14, thereby adapting to different working conditions and usage requirements, and also improving manufacturing flexibility for an operator.

Optionally, the total flow cross-sectional area of all the balance passages 14 is greater than the flow cross-sectional area of the liquid port 21. In this way, the above configuration ensures that a flow rate through the balance passages 14 is greater than that through the liquid port 21, thereby supporting a larger-sized liquid port 21 and then improving the versatility of the anti-freeze valve.

In the present embodiment, the working principle of the anti-freeze valve is as follows:
When the temperature in the liquid passage is higher than a valve closing temperature (3-5°C), the thermo-bulb push rod 52 extends and pushes the valve core 30 to move. The valve core 30 overcomes a spring force of the first elastic structure 40, and an O-ring at the valve core 30 comes into contact with the liquid port 21 of the piston 20 to close the liquid port 21. At this point, the first elastic structure 40 is compressed, and the upper chamber of the piston forms a high-pressure chamber. Meanwhile, a lower portion of the piston 20 is in communication with the drainage passage 18 to form a low-pressure region, generating a downward differential pressure force on the piston 20. Under the action of the downward differential pressure force, the piston 20 moves downward to close the drainage passage 18, thereby achieving the closing of the anti-freeze valve.

When the temperature in the liquid passage is lower than a valve opening temperature (0-3°C), the thermo-bulb push rod 52 contracts, and the valve core 30, under the action of the elastic force of the first elastic structure 40, overcomes the differential pressure force at the liquid port 21 and moves upward to open the liquid port 21. At this point, the upper chamber of the piston is in communication with the drainage passage 18 by the liquid port 21, resulting in a pressure drop and the formation of a low-pressure chamber. Meanwhile, the lower portion of the piston is in communication with the first liquid passage 111 and not in communication with the drainage passage 18, and therefore remains a high-pressure region, such that the pressure below the piston is greater than the pressure above the piston. As a result, the piston 20 is subjected to an upward differential pressure force and moves upward to open the drainage passage 18, thereby enabling high-flow drainage through the drainage passage 18.

### Embodiment 2

The difference between the anti-freeze valve in Embodiment 2 and that in Embodiment 1 lies in: the structure of the anti-freeze valve is different.

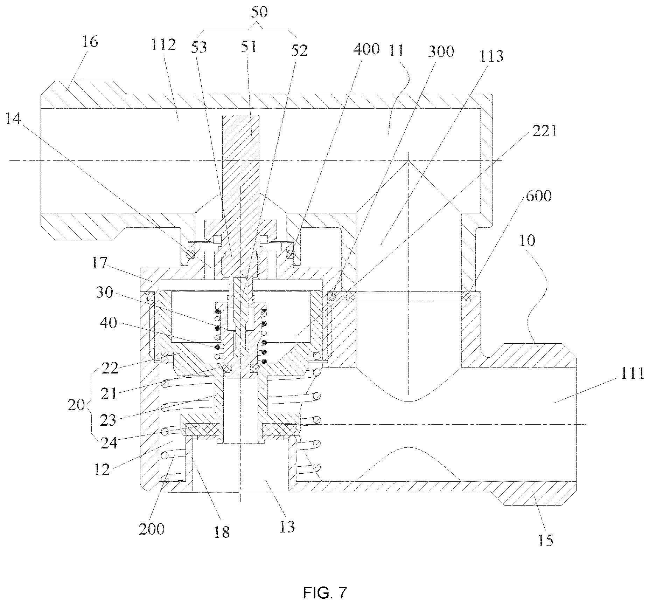

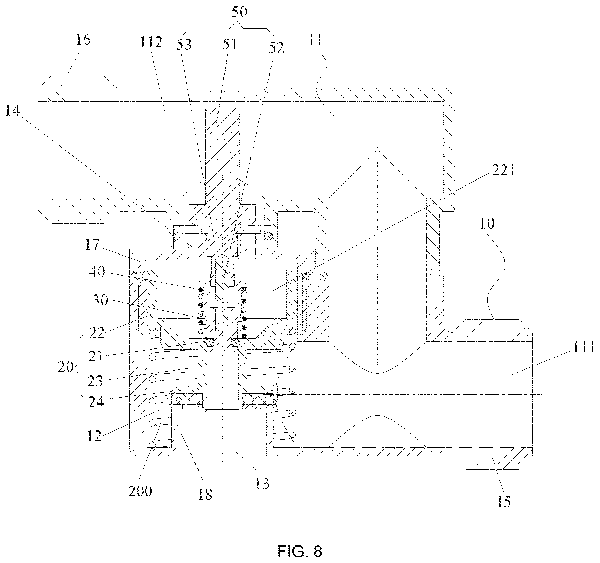

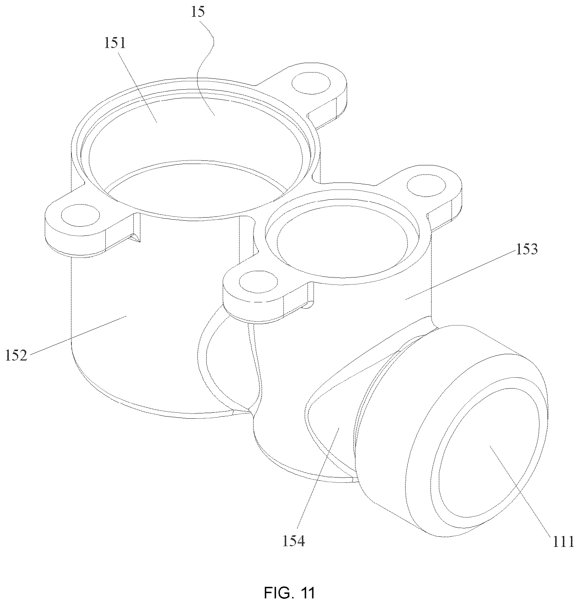

As shown in FIG. 7 to FIG. 13, an inner hole of the drainage passage 18 serves as a drainage portion 13. The anti-freeze valve further includes a second elastic structure 200 configured to apply an elastic force to move the piston 20 toward a side away from the drainage portion 13. Specifically, under normal operating conditions, liquid is allowed to flow within the liquid flow portion 11, while the liquid port 21 and the drainage portion 13 are both in a closed state, and the first elastic structure 40 and the second elastic structure 200 are both in a compressed state, such that the liquid inside the valve seat assembly is prevented from flowing through the drainage portion 13. When the temperature of the medium surrounding the temperature-sensing portion 51 is lower than the preset temperature value, the liquid inside the anti-freeze valve can freeze. At this point, the thermo-bulb push rod 52 contracts, and the first elastic structure 40, under the action of an elastic force thereof, drives the valve core 30 to move upward toward a side away from the liquid port 21 so as to open the liquid port 21. Meanwhile, the second elastic structure 200, under the action of an elastic force thereof, pushes the piston 20 to move upward toward a side away from the drainage portion 13 so as to open the drainage portion 13 for drainage.

In the present embodiment, the piston body 22 includes an accommodating space 221 and a liquid port 21 that are in fluid communication with each other, and at least a portion of the valve core 30 is positioned within the accommodating space 221. The piston body 22 further includes a limiting recess 222, and at least a portion of the second elastic structure 200 extends into the limiting recess 222 and is in a limiting fit with the limiting recess 222. In this way, when the temperature in the second liquid passage 112 is lower than the preset temperature value, the valve core 30 opens the liquid port 21. At this point, the liquid port 21 is in communication with the drainage passage 18 by the communication portion 23, thereby ensuring that the pressure in the upper chamber of the piston is lower than that in the lower chamber of the piston. Under the combined action of the pressure difference between the upper and lower chambers of the piston and the elastic force of the second elastic structure 200, the piston 20 moves upward to open the drainage passage 18. As a result, the anti-freeze valve performs a drainage operation to prevent the liquid inside the anti-freeze valve from freezing. Meanwhile, this configuration simplifies the structure of the piston 20, facilitates manufacturing and implementation, and thereby reduces the manufacturing cost and difficulty of the piston 20.

In the present embodiment, the limiting recess 222 is configured to limit and stop the second elastic structure 200, so as to ensure that a direction of the elastic force direction of the second elastic structure 200 is consistent with a movement direction of the valve core 30, thereby enabling the movement direction of the valve core 30 to be consistent with that of the piston 20.

In the present embodiment, two ends of the first elastic structure 40 respectively abut against the valve core 30 and the piston 20, so as to apply an elastic force to move the valve core 30 toward a side away from the liquid port 21 and to apply an elastic force to move the piston 20 toward one side of the drainage portion 13.

In the present embodiment, the first elastic structure 40 is a first spring, and the second elastic structure 200 is a second spring. A stiffness coefficient of the first spring is greater than a stiffness coefficient of the second spring. In this way, when the temperature in the liquid flow portion 11 is lower than the preset temperature value, the above configuration ensures that the elastic force of the first spring is smaller than that of the second spring, so that the second elastic structure 200 together with the medium in the liquid flow portion 11 jointly pushes the piston 20 to move toward a side away from the drainage portion 13, so as to open the drainage portion 13. Meanwhile, the above configuration simplifies the structures of the first elastic structure 40 and the second elastic structure 200, facilitates manufacturing and implementation, and reduces the manufacturing cost of the anti-freeze valve.

Optionally, a cross-section of the drainage passage 18 is circular and has a diameter greater than or equal to 10 mm. In this way, the above configuration allows the anti-freeze valve to be a large-port anti-freeze valve, so that the liquid in the liquid flow portion 11 can be quickly discharged from the drainage portion 13, thereby achieving rapid drainage of the anti-freeze valve and improving the drainage efficiency of the anti-freeze valve.

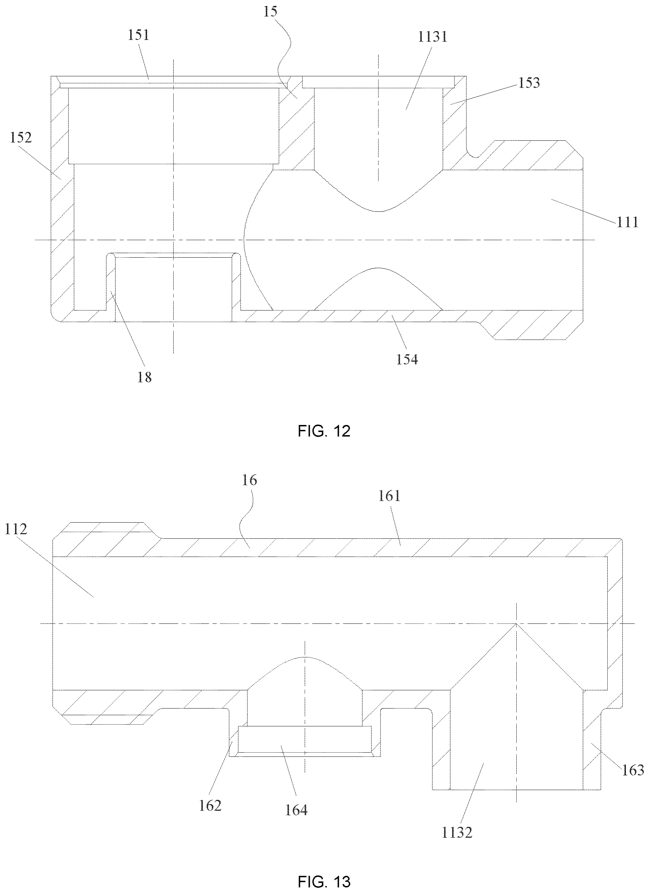

As shown in FIG. 12 and FIG. 13, the communication passage 113 includes a first sub-communication passage 1131 and a second sub-communication passage 1132. The first valve seat 15 includes a first cylindrical body 152, a second cylindrical body 153 and a first tubular body 154. The first cylindrical body 152 has a first mounting opening 151. The drainage passage 18 is located within the first cylindrical body 152, and a limiting space is formed between the drainage passage 18 and an inner cylindrical wall of the first cylindrical body 152. The limiting space is configured to limit and stop the second elastic structure 200. The second cylindrical body 153 is connected to the second valve seat 16, and an inner cavity of the second cylindrical body 153 forms the first sub-communication passage 1131. The tubular body 154 penetrates through the first cylindrical body 152 and the second cylindrical body 153, and an inner cavity of the tubular body 154 forms the first liquid passage 111. In this way, at least a portion of the thermo-bulb 50 extends into the first cylindrical body 152, and the first cylindrical body 152 is in communication with the second cylindrical body 153 by the first tubular body 154, ensuring that the thermo-bulb 50, the piston 20, and the valve core 30 do not affect the normal flow of the medium in the liquid passages, thereby improving the delivery efficiency of the anti-freeze valve. Meanwhile, the above configuration ensures that the drainage passage 18 is located within the first liquid passage 111, so that the drainage passage 18 is closer to the circulating water, and under a low-temperature environment, the temperature difference between the drainage passage 18 and the circulating water is smaller, which allows a lower temperature of the circulating water without causing the drainage passage 18 to freeze, and can support a lower temperature of the circulating water and a lower ambient temperature.

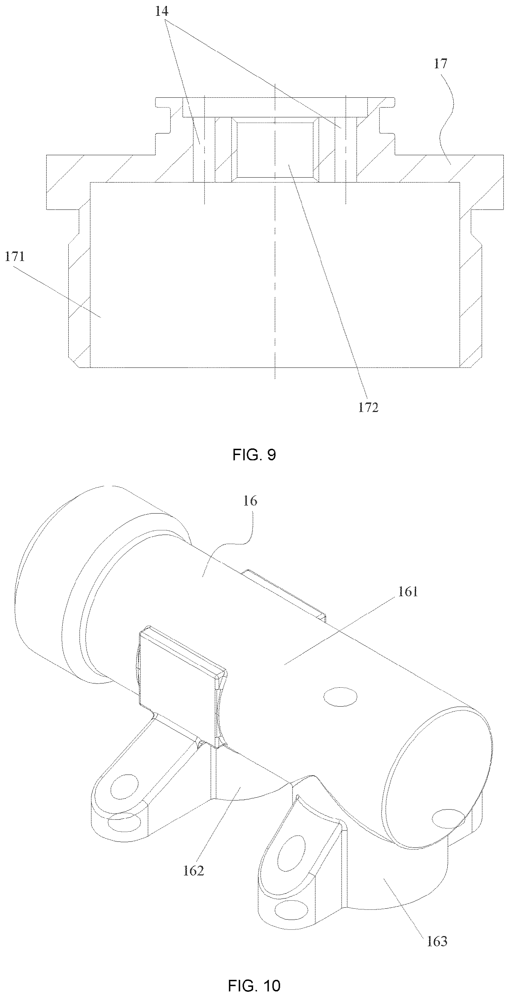

As shown in FIG. 10, the second valve seat 16 includes a second tubular body 161, a third cylindrical body 162, and a fourth cylindrical body 163. An inner cavity of the second tubular body 161 serves as a second liquid passage 112. The third cylindrical body 162 is disposed on the second tubular body 161 and is in communication with the second liquid passage 112. The third cylindrical body 162 has a second mounting opening 164. The fourth cylindrical body 163 is arranged on the second tubular body 161 and is in communication with the second liquid passage 112. An inner cavity of the fourth cylindrical body 163 forms the second sub-communication passage 1132 and is in communication with the second cylindrical body 153. The first cylindrical body 152 and the third cylindrical body 162 are oppositely arranged and connected, and the second cylindrical body 153 and the fourth cylindrical body 163 are oppositely arranged and connected. In this way, the temperature-sensing portion 51 extends into the third cylindrical body 162, the first liquid passage 111 is in communication with the second liquid passage 112 by the fourth cylindrical body 163, and the third cylindrical body 162 is in communication with the fourth cylindrical body 163 by the second tubular body 161, thereby ensuring that the thermo-bulb 50 does not affect the normal flow of the medium in the liquid flow portion 11, thereby improving the delivery efficiency of the anti-freeze valve. Meanwhile, the above configuration simplifies the structure of the second valve seat 16, facilitates manufacturing and implementation, and thereby reduces the manufacturing cost of the second valve seat 16.

In the present embodiment, the third cylindrical body 162 and the fourth cylindrical body 163 are arranged in parallel with each other, and the third cylindrical body 162 is arranged perpendicular to the second tubular body 161.

As shown in FIG. 7, the anti-freeze valve further includes a third sealing structure 600. The third sealing structure 600 is disposed at the connection between the second cylindrical body 153 and the fourth cylindrical body 163. The second sealing structure 400 is located between an outer sidewall of the valve cover 17 and an inner sidewall of the second mounting opening 164, and the third sealing structure 600 is located between an end surface of the second cylindrical body 153 and an end surface of the fourth cylindrical body 163. With the above configuration, the third sealing structure 600 improves the sealing performance at the connection between the second cylindrical body 153 and the fourth cylindrical body 163, thereby preventing liquid leakage. Meanwhile, the second sealing structure is a radial seal, and the third sealing structure is a planar seal, thereby lowering the requirement for the positioning accuracy of the two holes.

Optionally, the third sealing structure 600 is a sealing ring.

From the above description, it can be seen that the embodiments of the present invention achieve the following technical effects:
The piston is movably disposed in the mounting cavity to block or open the drainage passage, and the piston has a liquid port that is in communication with the drainage passage. The valve core is movably disposed in the mounting cavity to close or open the liquid port. Under normal operating conditions, liquid is allowed to flow within the first liquid passage and the second liquid passage, while the liquid port and the drainage passage are both in a closed state, such that the liquid inside the valve seat assembly is prevented from flowing through the drainage passage. When the temperature of the medium surrounding the temperature-sensing portion is lower than the preset temperature value, the liquid inside the anti-freeze valve can freeze. At this point, the thermo-bulb push rod contracts, causing the valve core to move to open the liquid port. Since the mounting cavity is in communication with the second liquid passage by the balance passage, the pressure in the upper chamber of the piston decreases. As a result, the medium in the first liquid passage pushes the piston to move toward the side away from the drainage passage. The pressure in the lower chamber of the piston is greater than the pressure in the upper chamber of the piston, so the piston moves upward toward a side away from the drainage passage under the action of the pressure difference, so as to open the drainage passage for drainage.

Compared with the prior art a valve port is opened or closed solely through a thermo-bulb push rod, the anti-freeze valve of the present invention enables the piston to move up and down based on the pressure difference between the upper and lower chambers of the piston. In this way, the piston opens or closes the drainage passage, thereby solving the problem of poor reliability in valve port opening and closing caused by the thermo-bulb of an anti-freeze valve in the prior art, and improving the drainage reliability of the drainage passage and the operational reliability of the anti-freeze valve. Meanwhile, the above configuration of the piston enables a large-sized drainage passage to be opened or closed, thereby enhancing the versatility of the anti-freeze valve.

Apparently, the embodiments described above are only a part rather than all of the embodiments of the present invention. Based on the embodiments in the present invention, all other embodiments obtained by those of ordinary in the art without creative efforts shall fall within the scope of protection of the present invention.

It should be noted that the terminology used herein is for the purpose of describing particular embodiments only and is not intended to limit the exemplary embodiments of the present invention. As used herein, unless the context clearly dictates otherwise, the singular forms are intended to include the plural forms as well. It should also be understood that when the terms "comprise" and/or "include" are used in this specification, they specify the presence of stated features, steps, operations, devices, components, and/or combinations thereof.

It should be noted that the terms "first", "second", etc. in the description and claims of the present invention and the accompanying drawings are used for distinguishing similar objects, but not necessarily used for describing any particular order or a chronological order. It is to be understood that the data so used are interchangeable under appropriate circumstances such that the embodiments of the present invention described herein can be practiced in sequence other than those illustrated or described herein.

The foregoing is merely a preferred embodiment of the present invention and is not intended to limit the present invention which can be subject to various modifications and variations to those skilled in the art. Any modification, equivalent replacement, improvement, etc. made within the spirit and principles of the present invention should fall within the scope of protection of the present invention.

## Claims

1. An anti-freeze valve, wherein the anti-freeze valve comprising:
a valve seat assembly (10), the valve seat assembly (10) comprises a first liquid passage (111), a second liquid passage (112), a mounting cavity (12), a balance passage (14) and a drainage passage (18), the first liquid passage (111) is in communication with the second liquid passage (112), the drainage passage (18) is in communication with the first liquid passage (111), and the mounting cavity (12) is in communication with the second liquid passage (112) by the balance passage (14);
a piston (20), movably disposed in the mounting cavity (12) to block or open the drainage passage (18), the piston (20) has a liquid port (21), the liquid port (21) is in communication with the drainage passage (18), and a flow area of the liquid port (21) is smaller than a flow area of the drainage passage (18);
a valve core assembly,the valve core assembly comprises a valve core (30), the valve core (30) is movably disposed in the mounting cavity (12) to close or open the liquid port (21); and
a thermo-bulb (50), connected to the valve seat assembly (10), the thermo-bulb (50) comprises a temperature-sensing portion (51) and a thermo-bulb push rod (52), and the thermo-bulb push rod (52) is configured to drive the valve core (30) to move,
wherein when a temperature of a medium surrounding the temperature-sensing portion (51) is lower than a preset temperature value, the thermo-bulb push rod (52) contracts, causing the valve core (30) to move to open the liquid port (21), and a medium in the first liquid passage (111) pushes the piston (20) to move toward a side away from the drainage passage (18) to open the drainage passage (18).

2. The anti-freeze valve as claimed in claim 1, wherein one end of the drainage passage (18) extends into the first liquid passage (111).

3. The anti-freeze valve as claimed in claim 1, wherein the valve core assembly further comprises:
a first elastic structure (40), the first elastic structure (40) is configured to apply an elastic force to move the valve core (30) toward a side away from the liquid port (21).

4. The anti-freeze valve as claimed in claim 1, wherein a flow area of the balance passage (14) is smaller than a flow area of the liquid port (21).

5. The anti-freeze valve as claimed in claim 1, wherein the piston (20) comprises:
a piston body (22), provided with the liquid port (21);
a communication portion (23), a first end of the communication portion (23) is connected to the piston body (22), and the liquid port (21) is in communication with the drainage passage (18) by the communication portion (23); and
a blocking portion (24), the blocking portion (24) connected to a second end of the communication portion (23) and configured to block or open the drainage passage (18).

6. The anti-freeze valve as claimed in claim 5, wherein the liquid port (21) is a tapered hole, the communication portion (23) has a straight hole, and the liquid port (21) is in communication with the drainage passage (18) by the straight hole; an aperture of the tapered hole gradually decreases in a direction from the tapered hole to the straight hole.

7. The anti-freeze valve as claimed in claim 3, wherein the valve seat assembly (10) comprises:
a first valve seat (15), provided with the first liquid passage (111) and a first mounting opening (151);
a second valve seat (16), provided with the second liquid passage (112), the first valve seat (15) being connected to the second valve seat (16); and
a valve cover (17), disposed in the first mounting opening (151) and connected to both the first valve seat (15) and the second valve seat (16), wherein the valve cover (17) has the balance passage (14) and a first mounting hole (171); the valve cover (17) and the first valve seat (15) together define the mounting cavity (12), and at least a portion of the piston (20) is slidably disposed in the first mounting hole (171), and an extending direction of the first mounting hole (171) is consistent with a sliding direction of the piston (20).

8. The anti-freeze valve as claimed in claim 7, wherein the valve cover (17) comprises:
a valve cover body (173), provided with a second mounting hole (172), the balance passage (14) and the first mounting hole (171), a thermo-bulb body (53) of the thermo-bulb (50) is disposed in the second mounting hole (172), and the balance passage (14) is spaced apart from the second mounting hole (172); and
a cylindrical structure (174), located within the first mounting hole (171), a first end of the cylindrical structure (174) is connected to the valve cover body (173); at least a portion of the valve core (30) is located within an inner cavity of the cylindrical structure (174), and the inner cavity is in communication with both the balance passage (14) and the second mounting hole (172).

9. The anti-freeze valve as claimed in claim 8, wherein the valve cover (17) further comprises:
a stopper structure (175), disposed on a second end of the cylindrical structure (174), the stopper structure (175) has a through hole (1751) for the valve core (30) to pass through, and the stopper structure (175) is configured to limit and stop the first elastic structure (40).

10. The anti-freeze valve as claimed in claim 7, wherein the second valve seat (16) has a second mounting opening (164), at least a portion of the valve cover (17) extends into the second mounting opening (164), and the second liquid passage (112) is in communication with the balance passage (14) by the second mounting opening (164); the anti-freeze valve further comprises:
a first sealing structure (300), disposed between the valve cover (17) and the first mounting opening (151); or
a second sealing structure (400), disposed between the valve cover (17) and the second mounting opening (164); or
a first sealing structure (300), disposed between the valve cover (17) and the first mounting opening (151); and
a second sealing structure (400), disposed between the valve cover (17) and the second mounting opening (164).

11. The anti-freeze valve according to claim 8, wherein the balance passage (14) is a single passage located on one side of the second mounting hole (172); or a plurality of balance passages (14) are arranged circumferentially around the second mounting hole (172) at intervals.

12. The anti-freeze valve as claimed in claim 1, wherein an inner hole of the drainage passage (18) serves as a drainage portion (13); the anti-freeze valve further comprises:
a second elastic structure (200), configured to apply an elastic force to move the piston (20) toward a side away from the drainage portion (13).

13. The anti-freeze valve as claimed in claim 12, wherein the valve core assembly further comprises a first elastic structure (40), the first elastic structure (40) being configured to apply an elastic force to move the valve core (30) toward a side away from the liquid port (21) and to apply an elastic force to move the piston (20) toward one side of the drainage portion (13).

14. The anti-freeze valve according to claim 13, wherein the first elastic structure (40) is a first spring, the second elastic structure (200) is a second spring, and a stiffness coefficient of the first spring is greater than a stiffness coefficient of the second spring.

15. The anti-freeze valve according to claim 1, wherein a cross-section of the drainage passage (18) is circular and has a diameter greater than or equal to 10 mm.

16. The anti-freeze valve as claimed in claim 13, wherein the valve seat assembly (10) further comprises:
a communication passage (113), disposed at an angle to both the first liquid passage (111) and the second liquid passage (112), the first liquid passage (111) being in communication with the second liquid passage (112) by the communication passage (113),
wherein the communication passage (113) is offset from the drainage passage (18).

17. The anti-freeze valve as claimed in claim 16, wherein the valve seat assembly (10) comprises a first valve seat (15) and a second valve seat (16), the first valve seat (15) has the first liquid passage (111) and the first mounting opening (151), the second valve seat (16) has the second liquid passage (112), and the first valve seat (15) is connected to the second valve seat (16); the communication passage (113) comprises a first sub-communication passage (1131) and a second sub-communication passage (1132); the first valve seat (15) comprises:
a first cylindrical body (152), provided with a first mounting opening (151), the drainage passage (18) is located within the first cylindrical body (152), a limiting space is formed between the drainage passage (18) and an inner cylindrical wall of the first cylindrical body (152), and the limiting space is configured to limit and stop the second elastic structure (200);
a second cylindrical body (153), connected to the second valve seat (16), an inner cavity of the second cylindrical body (153) forming the first sub-communication passage (1131); and
a tubular body (154), penetrated through the first cylindrical body (152) and the second cylindrical body (153), an inner cavity of the tubular body (154) forming the first liquid passage (111).

18. The anti-freeze valve as claimed in claim 17, wherein the second valve seat (16) comprises:
a second tubular body (161), an inner cavity of the second tubular body (161) forming the second liquid passage (112);
a third cylindrical body (162), disposed on the second tubular body (161) and being in communication with the second liquid passage (112), the third cylindrical body (162) having a second mounting opening (164); and
a fourth cylindrical body (163), disposed ed on the second tubular body (161) and being in communication with the second liquid passage (112), an inner cavity of the fourth cylindrical body (163) forming the second sub-communication passage (1132) and being in communication with the second cylindrical body (153),
wherein the first cylindrical body (152) and the third cylindrical body (162) are oppositely disposed and connected, and the second cylindrical body (153) and the fourth cylindrical body (163) are oppositely disposed and connected.

19. The anti-freeze valve according to claim 18, further comprising:
a third sealing structure (600) disposed at the connection between the second cylindrical body (153) and the fourth cylindrical body (163),
wherein the third sealing structure (600) is located between an end surface of the second cylindrical body (153) and an end surface of the fourth cylindrical body (163).
